# FASCICULE DE BREVET EUROPEEN

(11) **EP 2 303 029 B1**
(45) Date de publication et mention de la délivrance du brevet: **02.01.2013**
(21) Numéro de dépôt: 09765988.2
(22) Date de dépôt: 13.05.2009
(51) Int. Cl.: A22C 25/08, B65B 25/06, B65B 35/24, B65B 5/04, B65B 63/02

(54) **PROCEDE DE MISE EN BOITE DE MATIERE ALIMENTAIRE DE FORME CYLINDRIQUE, ET DISPOSITIF DESTINE A LA MISE EN OEUVRE DE CE PROCEDE**
VERFAHREN ZUM EINDOSEN VON NAHRUNGSMITTELN MIT ZYLINDRISCHER FORM SOWIE GERÄT ZUM DURCHFÜHREN DIESES VERFAHRENS
PROCESS FOR CANNING FOODSTUFF OF CYLINDRICAL SHAPE, AND DEVICE FOR IMPLEMENTATION OF THIS PROCESS

(30) Priorité: 18.06.2008 FR 0803390
(43) Date de publication de la demande: 06.04.2011
(73) Titulaire: SARL Prima Daniel, 29300 Redene (FR)
(72) Inventeur: PRIMA, Daniel, F-29300 Redene (FR)
(74) Mandataire: Poupon, Michel
(86) Numéro de dépôt international: PCT/FR2009/000568
(87) Numéro de publication internationale: WO 2009/153426

(56) Documents cités:
- EP-A- 0 509 331
- WO-A-2008/109084
- FR-A- 2 811 516
- US-A- 2 669 378
- US-A- 4 116 600
- US-A1- 2003 097 819

## Description

La présente invention concerne un procédé de mise en boîte de matière alimentaire se présentant sous forme cylindrique, et notamment sous forme de saucisson, ainsi qu'un dispositif destiné particulièrement à la mise en oeuvre de ce procédé.

La mise en forme cylindrique des matières alimentaires, destinées à être mises en boîtes en vue notamment de leur conservation, permet de ne pas altérer le produit, quand les morceaux entiers sont utilisés. Elle est particulièrement utilisée pour le poisson, ce qui permet d'utiliser les longes de saumon ou de thon, qui sont des denrées fragiles. La mise en forme de saucisson permet d'avoir un produit fini, qui a une présentation irréprochable, tout en permettant de garder la matière première intacte, grâce au maintien permis par le boyau du saucisson.

La mise en forme de saucisson de matière alimentaire entière, c'est-à-dire non broyée ou hachée, a été développée par la demanderesse, dans le brevet FR 2 811 516. La matière alimentaire est pressée fortement entre deux bandes transporteuses présentant une forme d'auges et dont le profil interne est cranté, qui forment un tunnel de convoyage. Les bandes sont ensuite introduites de force dans un boyau, ce qui va conférer à la matière alimentaire une forme de saucisson.

Si ces saucissons de matière alimentaire sont destinés à être mis en boîte, ils sont généralement découpés puis déposés manuellement dans la boîte de conserve. Ces opérations sont longues et nécessitent de la main d'oeuvre, ce qui représente une perte de rentabilité.

Il est également connu de découper les saucissons en amont du dispositif de remplissage vont par exemple US 2 669 378 A ou US 2003/0097819 A1.

La présente invention entend remédier à ces inconvénients en proposant un procédé et un dispositif permettant une découpe et une mise en boîte automatiques de saucissons de matière alimentaire.

A cet effet, la présente invention a pour objet un procédé de remplissage automatique de boîtes de conserve avec de la matière alimentaire se présentant sous la forme d'un cylindre continu, caractérisé en ce qu'il consiste à acheminer et insérer une partie dudit cylindre dans une boîte dont l'orifice est maintenu verticalement puis à trancher le cylindre au ras de la boîte.

On comprendra mieux l'invention en référence aux dessins annexés sur lesquels :

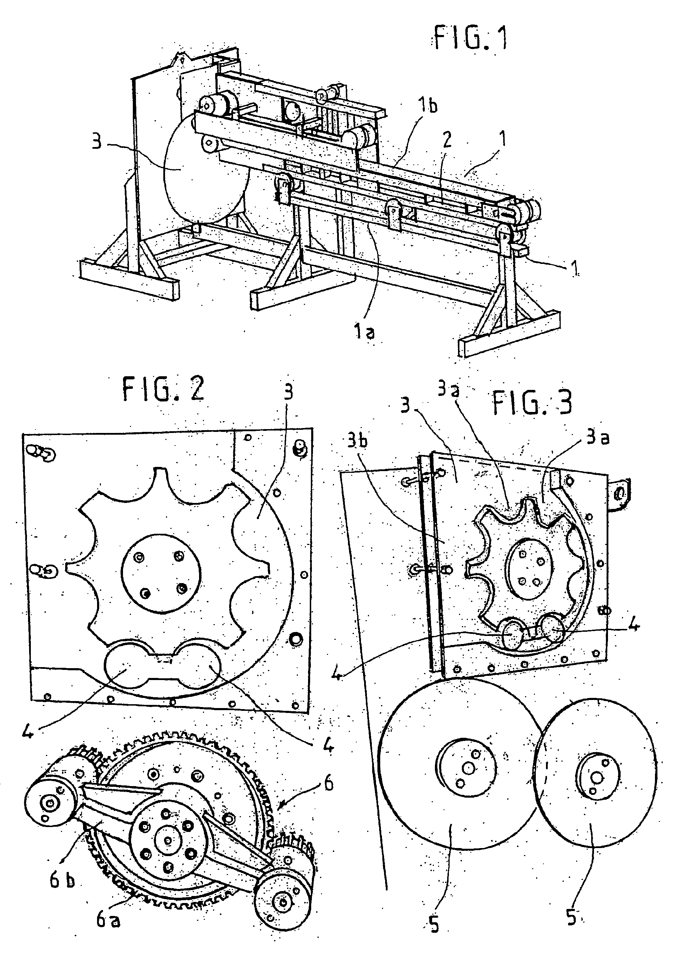

- la figure 1 représente une vue d'ensemble du dispositif d'emboîtement,
- la figure 2 est une représentation détaillée du plateau contenant les boites, et du système d'actionnement du dispositif de tranchage des saucissons,
- la figure 3 est une représentation détaillée du dispositif de découpe.

La spécificité du procédé d'emboîtement selon l'invention réside dans le fait qu'il permet le remplissage de boîtes, avec des matières alimentaires ayant une forme de saucisson. Du fait qu'il s'agit d'un produit semi-transformé, son utilisation peut être mieux maîtrisée que de la matière brute.

Le procédé de mise en boîte selon l'invention consiste tout d'abord à utiliser des saucissons de matière alimentaire, préférentiellement de la matière première non transformée, c'est-à-dire non hachée ou non broyée, et en particulier des longes de thon ou de saumon. La mise en forme de la matière alimentaire en saucisson ne faisant pas partie de l'invention, elle ne sera pas plus détaillée.

Les saucissons de matière alimentaire sont préalablement disposés sur une table de chargement (non représentée), qui les achemine vers des convoyeurs sans fin 1. Ces derniers, toujours agencés par paire, sont au moins au nombre de deux, et préférentiellement au nombre de quatre de manière à augmenter le débit de remplissage des boîtes. La suite de la description s'appliquera au cas où le dispositif selon l'invention est constitué de quatre convoyeurs, mais cet exemple ne sera nullement limitatif.

Les convoyeurs 1 sont disposés par paire, l'un est placé en position inférieure 1 a tandis que l'autre est en position supérieure 1b, de manière à ce qu'ils soient disposés l'un en face de l'autre, et de manière parallèle. Le convoyeur supérieur 1 b présente une longueur moindre par rapport au convoyeur inférieur 1a.

Chaque paire de convoyeur 1 a, 1 b est munie d'une bande transporteuse présentant une forme de goulotte, qui va entourer partiellement le saucisson de matière alimentaire et le guider.

Sur la longueur où chaque convoyeur, inférieur 1a et supérieur 1b, est parallèle, les bandes transporteuses sont tournées l'une vers l'autre de manière à former un tunnel de convoyage 2, dans lequel le saucisson de matière alimentaire va être acheminé pour être emboîté.

A la sortie du tunnel de convoyage 2, après leur acheminement, les saucissons de matière alimentaire se retrouvent face à un plateau 3, disposé perpendiculairement par rapport aux convoyeurs 1.

Ce plateau 3 présente sur sa face arrière une zone rotative 3a, tandis que sa face avant est constituée d' une plaque 3b, faisant face aux convoyeurs 1. Le plateau 3 est en position statique quand les saucissons arrivent à sa hauteur par l'intermédiaire des convoyeurs 1.

La zone rotative 3a présente sensiblement une forme d'étoile dont les branches sont arrondies, correspondant à un demi-cercle. Cette forme arrondie représente des cavités qui permettent de poser et de retenir partiellement les boîtes de conserve, présentant également une forme de cercle. Les boîtes sont définitivement maintenues au moyen de la plaque 3b, qui les bloque en position verticale pour qu'elles fassent face aux convoyeurs 1.

Dans le cas où les boîtes de conserve auraient une forme ovale, rectangulaire ou carrée, la zone rotative 3a présenterait des branches d'étoile dont la forme serait adaptée à celle de la boîte. Les cavités de la zone rotative 3a correspondront en fait à la forme d'une demi-boîte de conserve.

Certaines de ces boîtes de conserve, deux quand les convoyeurs sont au nombre de deux paires, sont positionnées en face de deux orifices de forme circulaire 4, disposés en partie basse de la plaque 3b du plateau 3, et à même hauteur par rapport aux convoyeurs inférieurs 1 a, de manière à ce que ces boîtes soient mises en contact avec les saucissons.

Le diamètre des orifices 4 correspond sensiblement à celui des boîtes de conserve. Cependant, la taille et la forme de ces orifices peuvent varier selon les caractéristiques de la boîte de conserve qui doit y être logée.

Le fait qu'il y ait préférentiellement deux paires de convoyeurs 2 permet au plateau 3 de présenter simultanément deux boîtes de conserves à deux saucissons de matière alimentaire, augmentant ainsi le débit de remplissage des boîtes.

Le fait que le convoyeur inférieur 2a ait une longueur supérieure au convoyeur supérieur 2b permet de faire avancer le saucisson vers le plateau 3, et plus précisément au niveau des orifices 4, et en particulier vers la boite qui y est disposée.

Le saucisson de matière alimentaire est ensuite découpé au moyen de lames circulaires tranchantes 5, formant un couteau. Ces lames circulaires 5 sont au nombre de deux, et fonctionnent au moyen d'un engrenage 6, disposé sur leur face arrière. Ces lames 5 sont disposées en dessous du plateau 3, et en décalage de manière à ce qu'elles viennent se superposer à la plaque 3b, lors de leur actionnement.

Le dispositif d'engrenage 6 est constitué d'une roue dentée 6a sur laquelle est disposée un bras articulé 6b portant à chacune de ses extrémités une des lames circulaires 5. Après que les saucissons soient insérés dans la boîte, le dispositif d'engrenage 6 se met automatiquement en route ; il va ainsi faire effectuer un mouvement de rotation au bras 6b, permettant à l'une des lames circulaires 6 de venir se superposer à la plaque 3b du plateau 3, pour y couper le saucisson. Les lames circulaires 5 sont actionnées par une force centrifuge.

Les lames circulaires 6, au nombre de deux, présentent un diamètre différent, permettant de s'adapter à la nature du saucisson alimentaire.

Une fois les boîtes remplies par deux saucissons sectionnés, elles sont décalées par déplacement d'un cran de la zone rotative 3a du plateau 3, qui va alors disposer deux nouvelles boîtes vides au niveau des orifices 4, en face des convoyeurs 1. Ce déplacement est permis par un dispositif d'engrenage, qui va entraîner la rotation de la zone rotative 3a du plateau 3, la plaque 3b étant quant à elle fixe.

Le déplacement de la zone rotative 3a du plateau 3 permet de présenter de nouvelles boîtes vides devant les saucissons de matière alimentaire. A chaque déplacement de la zone rotative 3a, deux nouvelles boîtes sont remplies de saucisson de matière alimentaire.

Une fois que toutes les boîtes présentes dans la zone rotative 3a du plateau 3 sont remplies de saucisson de matière alimentaire, elles sont évacuées, et la zone rotative 3a est réapprovisionnée par de nouvelles boîtes vides. Ce dispositif de réapprovisionnement et de vidage est automatique et raccordé à la machine d'emboîtement proprement dite, de manière à ce que cette dernière puisse tourner en continu.

L'ensemble du dispositif d'emboîtement des saucissons de matière alimentaire est commandé par un automate, qui va permettre notamment de régler l'actionnement des lames circulaires lorsque les boîtes sont remplies, le mouvement de la zone rotative et l'arrivée de nouvelles boîtes vides.

Le dispositif selon l'invention permet de limiter les pertes de matière alimentaire dans la mesure où l'emboîtage a lieu avant le tranchage des saucissons, et que la découpe se fait au ras des boîtes de conserve, grâce à la plaque du plateau, recouvrant les boîtes.

De plus, le dispositif fonctionnant en continu et de manière automatique, il permet d'économiser sur la main d'oeuvre, augmentant ainsi la rentabilité. Il permet d'emboîter approximativement 200 boîtes par minute.

Le dispositif d'emboîtement accueille préférentiellement des boîtes rondes, de différents diamètres ; elle pourrait cependant accueillir des boîtes de forme différente dans la mesure où les saucissons ont une forme non cylindrique.

Bien que l'invention ait été décrite avec des moyens de réalisation particuliers, elle comprend tous les équivalents techniques des moyens décrits.

## Revendications

1. Procédé de remplissage automatique de boîtes de conserve avec de la matière alimentaire se présentant sous la forme d'un cylindre continu, **caractérisé en ce qu'**il consiste à acheminer et insérer une partie dudit cylindre dans une boîte dont l'orifice est disposé verticalement puis à trancher le cylindre au ras de la boîte.

2. Dispositif de remplissage automatique de boîtes de conserves avec de la matière alimentaire se présentant sous la forme d'un cylindre continu, destiné à mettre en oeuvre le procédé selon la revendication 1, constitué d'une table de chargement et d'au moins deux convoyeurs 1 a, 1 b disposés par paire parallèle, le convoyeur inférieur 1a étant d'une longueur supérieure au convoyeur 1b, chaque convoyeur étant muni d'une bande transporteuse dans la zone de longueur identique et formant un tunnel d' acheminement pour ledit cylindre, **caractérisé en ce qu'**il est muni d'un plateau 3, disposé verticalement et faisant face aux convoyeurs 1, ledit plateau 3 emprisonnant lesdites boîtes entre une zone rotative 3a et une plaque 3b, , ladite plaque 3b étant munie en outre d'au moins un orifice 4, disposé au même niveau que le convoyeur inférieur 1 a, permettant la présentation d'une boîte devant un cylindre, et de deux lames circulaires 5, disposées en dessous du plateau 3.

3. Dispositif de remplissage automatique selon la revendication 2, **caractérisé en ce que** la zone rotative 3a est munie de cavités présentant la forme d'une demi-boîte de conserve.

4. Dispositif de remplissage automatique selon l'une des revendications 2 et 3, **caractérisé en ce que** la zone rotative 3a est actionnée par un engrenage, permettant de décaler les boîtes vides vers l'orifice 4.

5. Dispositif de remplissage automatique selon la revendication 2, **caractérisé en ce que** les lames circulaires 5 sont disposées sur un dispositif d'engrenage 6, constitué d'un bras articulé 6b porté par une roue dentée 6a.

6. Dispositif de remplissage automatique, selon l'une des revendications 2, 3, 4 et 5, **caractérisé en ce que** les lames circulaires 5 se superposent à la plaque 3b lors de leur actionnement.

7. Dispositif de remplissage automatique selon l'une des revendications 1 à 6, **caractérisé en ce qu'**il est actionné par un automate, permettant la découpe du cylindre de matière alimentaire après son insertion dans la boîte.

## Claims

1. Method for automatically filling cans with food matter in the form of a continuous cylinder, **characterised in that** it comprises guiding and inserting part of said cylinder into a can, the opening of which is positioned vertically and then cutting the cylinder level with the can.

2. Device for automatically filling cans with food matter in the form of a continuous cylinder, designed for implementing the method according to claim 1, comprising a loading table and at least two conveyors 1a, 1b positioned in pairs in parallel, the lower conveyor 1a being longer than conveyor 1b, each conveyor being provided with a conveyor belt in the area of identical length and forming a guiding tunnel for said cylinder, **characterised in that** it is provided with a panel 3 positioned vertically and facing the conveyors 1, said panel 3 enclosing said cans between a rotating area 3a and panel 3b, said panel 3b being further provided with at least one opening 4, which is arranged at the same level as the lower conveyor 1a and enables a can to be placed in front of a cylinder, and two circular blades 5 which are positioned below the panel 3.

3. Automatic filling device according to claim 2, **characterised in that** the rotating area 3a is provided with cavities in the form of half a can.

4. Automatic filling device according to any one of claims 2 and 3, **characterised in that** the rotating area 3a is actuated by a gearing, making it possible to move the empty cans toward the opening 4.

5. Automatic filling device according to claim 2, **characterised in that** the circular blades 5 are positioned on a gearing device 6 formed by an articulated arm 6b supported by a gearwheel 6a.

6. Automatic filling device according to any one of claims 2, 3, 4 and 5, **characterised in that** the circular blades 5 are superimposed on the panel 3b during their actuation.

7. Automatic filling device according to any one of claims 1 to 6, **characterised in that** it is actuated by an automatic unit, making it possible to cut the cylinder of food matter after it has been inserted into the can.

## Patentansprüche

1. Verfahren zum automatischen Befüllen von Konservenaufnahmebehältnissen mit Lebensmitteln, die die Gestalt eines durchgehenden Zylinders aufweisen, **dadurch gekennzeichnet, dass** es darin besteht, einen Teil des Zylinders in ein Aufnahmebehältnis zu befördern und einzubringen, dessen Öffnung senkrecht angeordnet ist, sowie den Zylinder anschließend dicht über dem Aufnahmebehältnis abzuschneiden.

2. Vorrichtung zum automatischen Befüllen von Konservenaufnahmebehältnissen mit Lebensmitteln, die die Gestalt eines durchgehenden Zylinders aufweisen, die dazu eingerichtet ist, das Verfahren nach Anspruch 1 durchzuführen und die aus einem Befüllungstisch sowie wenigstens zwei Fördereinrichtungen 1 a, 1 b gebildet ist, die paarweise parallel angeordnet sind, wobei die untere Fördereinrichtung 1a länger als die Fördereinrichtung 1b ist, wobei jede Fördereinrichtung mit einem gleich langen Transportband in den Bereich ausgestattet ist und einen Zuführtunnel für den Zylinder bildet, **dadurch gekennzeichnet, dass** sie eine Scheibe 3 aufweist, die senkrecht angeordnet ist und den Fördereinrichtungen 1 gegenüberliegt, wobei die Scheibe 3 die Aufnahmebehältnisse zwischen einem Drehbereich 3a und einer Platte 3b festhält, wobei die Platte 3b außerdem mit wenigstens einer Öffnung 4 versehen ist, die auf der gleichen Ebene wie die untere Fördereinrichtung 1a angeordnet ist und das Bereitstellen eines Aufnahmebehältnisses vor einem Zylinder erlaubt, und über zwei Kreismesser 5 verfügt, die unterhalb der Scheibe 3 angeordnet sind.

3. Vorrichtung zum automatischen Befüllen nach Anspruch 2, **dadurch gekennzeichnet, dass** der Drehbereich 3a Hohlräume in Gestalt eines halben Konservenaufnahmebehältnisses aufweist.

4. Vorrichtung zum automatischen Befüllen nach einem der Ansprüche 2 und 3, **dadurch gekennzeichnet, dass** der Drehbereich 3a durch ein Getriebe betätigt ist, wodurch ein Verschieben der leeren Aufnahmebehältnisse in Richtung der Öffnung 4 erlaubt ist.

5. Vorrichtung zum automatischen Befüllen nach Anspruch 2, **dadurch gekennzeichnet, dass** die Kreismesser 5 an einer Getriebevorrichtung 6 angeordnet sind, die aus einem an einem Zahnrad 6a angebrachten Gelenkarm 6b besteht.

6. Vorrichtung zum automatischen Befüllen nach einem der Ansprüche 2, 3, 4 und 5, **dadurch gekennzeichnet, dass** sich die Kreismesser 5 während ihrer Betätigung über die Platte 3b legen.

7. Vorrichtung zum automatischen Befüllen nach einem der Ansprüche 1 bis 6, **dadurch gekennzeichnet, dass** sie durch einen Automaten betätigt ist, wodurch das Zerschneiden des Zylinders aus Lebensmitteln nach seinem Einbringen in das Aufnahmebehältnis erlaubt ist.
